# EUROPÄISCHE PATENTANMELDUNG

(11) **EP 3 959 983 A1**
(43) Veröffentlichungstag der Anmeldung: **02.03.2022**
(21) Anmeldenummer: 21191845.3
(22) Anmeldetag: 18.08.2021
(51) Int. Cl.: A21C 9/06, A21C 9/08

(54) **VORRICHTUNG ZUM ERZEUGEN VON GEFÜLLTEN TEIGPRODUKTEN**

(30) Priorität: 25.08.2020 DE 102020210735
(71) Anmelder: Fritsch Bakery Technologies GmbH & Co. KG, 97348 Markt Einersheim (DE)
(72) Erfinder: BERNHARDT, Udo, 97346 Iphofen (DE); STRÖBEL, Alfred, 97199 Ochsenfurt (DE)
(74) Vertreter: Grünecker Patent- und Rechtsanwälte PartG mbB

(57) **Zusammenfassung**

Eine Vorrichtung (1) zum Erzeugen von gefüllten Teigprodukten (25) umfasst eine Fördervorrichtung (2), die zum Fördern von Teigstücken (3) in einer Produktionsrichtung (R) konfiguriert ist, ein Halteband (4), das oberhalb der Fördervorrichtung (2) angeordnet ist, und zum Eingreifen mit einem auf jeweils einem der Teigstücke (3) angeordneten Füllgut (5) konfiguriert ist, und eine Wickelvorrichtung (6), die zum Falten und/oder Wickeln eines der Teigstücke (3) konfiguriert ist. Die Wickelvorrichtung umfasst eine Faltvorrichtung (7), die dazu eingerichtet ist, einen Faltabschnitt (8) des Teigstücks (3) nach oben zu falten, wobei die Faltvorrichtung (7) einen Haken (9) umfasst, der schwenkbar über der Fördervorrichtung (2) angeordnet ist.

## Beschreibung

Die Erfindung bezieht sich auf Vorrichtungen zum Erzeugen von gefüllten Teigprodukten.

Solche Vorrichtungen sind beispielsweise aus der EP 1 726 209 A2 der Anmelderin bekannt. Das dort offenbarte Wickelsystem ist dazu eingerichtet, bestimmte Füllgüter in ein Teigstück einzurollen. Dabei wird zunächst durch ein Förderband ein Teigstück angeliefert, auf dem ein Füllgut platziert ist. Durch eine über dem Förderband angeordnete Andrückeinrichtung wird das Füllgut in das Teigstück eingedrückt, wodurch eine Haftung zwischen dem Teigstück und dem Füllgut entstehen soll. Durch eine ebenfalls über dem Förderband aber stromabwärts der Andrückeinrichtung angeordnete Wickel-Fördereinrichtung wird das Füllgut in das Teigstück eingewickelt. Dazu greift die Wickel-Fördereinrichtung mit dem Füllgut ein, sodass dieses in eine Rotation versetzt wird. Durch vorab erzeugte Haftung wird der an dem Füllgut haftende Abschnitt des Teigstücks von dem Förderband abgehoben und so die Wickelbewegung initiiert.

Im Praxiseinsatz hat sich herausgestellt, dass eine zuverlässige Erzeugung der Haftung zwischen dem Teigstück und dem Füllgut teils gar nicht, teils nur durch zusätzliche Maßnahmen, wie z. B. eine Benetzung des Teigstücks mit Flüssigkeit, erreicht werden kann. Des Weiteren lassen sich durch das in der EP 1 726 209 A2 offenbarte Wickelsystem nur im Wesentlichen formstabile und im Wesentlichen runde Füllgüter in Teigstücke einwickeln, nicht aber z. B. pastöse oder flache, wie etwa Käse- oder Schinkenscheiben.

Um bspw. mit pastösem Füllgut gefüllte Teigprodukte zu erzeugen, wird in der EP 2 366 290 A1 vorgeschlagen, Schwenkarme als Wickelkomponenten zu nutzen. Diese müssen jedoch gemäß dieser Offenbarung sehr nahe an der Auflagefläche des Förderbandes bzw. auf dieser aufliegend ausgebildet sein, um ihre Wickelfunktion erfüllen zu können. Dadurch entsteht das Risiko, dass pastöses Füllgut durch die Schwenkarme verschmiert wird. Um dieses Risiko zu reduzieren, schlägt die EP 2 366 290 A1 vor, die Wickelkomponenten quer zur Produktionsrichtung voneinander zu beabstanden. Bei formstabile Füllgütern, insbesondere solchen, die eine größere vertikale Dicke als das Teigstück aufweisen und/oder seitlich über das Teigstück hinausragen, kann diese Konfiguration jedoch zu Problemen führen, da die Wickelkomponenten mit dem Füllgut in Kontakt kommen, bevor sie das Teigstück berühren. Das kann dazu führen, dass das Füllgut auf dem Teigstück verschoben oder sogar gänzlich heruntergeschoben werden kann.

Aus der GB 183 848 A sind Verbesserungen bei Maschinen zur Erzeugung von ungefüllten Teigprodukten bekannt. Dort wird eine Kombination aus einer Andrückwalze und Haken genutzt, um ein ungefülltes Teigstück an seiner Vorderkante nach oben zu drehen. Bei der Herstellung von gefüllten Teigprodukten kann dies jedoch ebenfalls dazu führen, dass, insbesondere im Wesentlichen formstabile, Füllgüter durch das nach oben Drehen des Teigstücks unerwünscht verschoben werden. Besonders bei runden, d. h. rollfähigen Füllgütern kann dies durch Wegrollen des Füllguts zu erheblichen Störungen des Produktionsablaufs führen

Es ist daher eine Aufgabe der Erfindung, eine Vorrichtung zum Erzeugen von gefüllten Teigprodukten anzugeben, die einen störungsärmeren und somit effizienteren Betrieb ermöglicht.

Diese Aufgabe wird erfindungsgemäß gelöst, durch eine Vorrichtung mit den Merkmalen des Anspruchs 1. Vorteilhafte Weiterbildungen sind in den Unteransprüchen angegeben.

Die Erfindung sieht eine Vorrichtung zum Erzeugen von gefüllten Teigprodukten vor. Die Vorrichtung umfasst eine Fördervorrichtung, die zum Fördern von Teigstücken in einer Produktionsrichtung konfiguriert ist, wenigstens ein Halteband (oder zwei, drei, mehrere), das oberhalb der Fördervorrichtung angeordnet ist, und zum Eingreifen mit einem auf jeweils einem der Teigstücke angeordneten Füllgut konfiguriert ist, und eine Wickelvorrichtung, die zum Falten und/oder Wickeln eines der Teigstücke konfiguriert ist und eine Faltvorrichtung umfasst, die dazu eingerichtet ist, einen Faltabschnitt des Teigstücks nach oben zu falten, wobei die Faltvorrichtung wenigstens einen (oder zwei, drei, mehrere) Haken umfasst, der/die schwenkbar über der Fördervorrichtung angeordnet ist/sind.

Im Gegensatz zum alleinigen Eindrücken zum Erzeugen von Haftung zwischen Füllgut und Teigstück können die Haken zum nach oben Falten des Teigstücks die Zuverlässigkeit des Wickelvorgangs erhöhen. Insbesondere kann ein Ablösen des Teigstücks von dem Füllgut vermieden werden. Insbesondere bei formstabilen und/oder rollbaren Füllgütern kann durch die Kombination der Haken mit dem Halteband ein Verschieben des Füllguts durch die Faltvorrichtung verhindert werden, was die Zuverlässigkeit weiter erhöhen kann.

Der Abstand des Haltebands von der Fördervorrichtung kann einstellbar sein. Dadurch kann die Vorrichtung an unterschiedliche herzustellende Produkte, insbesondere auf unterschiedlich große Füllgüter, anpassbar sein. Neben der Faltvorrichtung kann die Wickelvorrichtung ein Wickelelement umfassen. Dieses kann dazu konfiguriert sein, einen durch die Faltvorrichtung initiierten Wickelvorgang fortzusetzen, vorzugsweise bis das gesamte Teigstück aufgewickelt ist. Es kann oberhalb der Fördervorrichtung angeordnet sein. Bei dem Wickelelement kann es sich um eine Wickelmatte, z. B. aus einem Drahtgeflechtsgurt, oder um ein Förderband handeln. Ein Abstand zwischen dem Wickelelement und dem Förderband kann einstellbar sein. Dadurch kann bspw. ein Umschlingungswinkel des Wickelelements um das Teigprodukt einstellbar sein.

Der Haken kann einen Eingreifabschnitt aufweisen, der zum Eingreifen mit einem auf der Fördervorrichtung geförderten Teigstück konfiguriert ist. Dies kann bedeuten, dass der Eingreifabschnitt in einer Ruheposition und/oder Ausgangsposition des Hakens auf der Fördervorrichtung aufliegen kann oder der Abstand des Eingreifabschnitts zu einer Oberfläche der Fördervorrichtung kleiner sein kann als eine Dicke des Teigstücks. Die Dicke des Teigstücks kann dabei in einer Richtung senkrecht zu der Oberfläche der Fördervorrichtung definiert sein.

Vorzugsweise kann der Haken durch den Eingriff des Eingreifabschnitts mit dem Teigstück und dessen Förderung durch die Fördervorrichtung von einer Ausgangsposition hin zu einer ausgelenkten Position schwenkbar sein. Dies kann den Vorteil aufweisen, dass kein zusätzlicher bzw. separater Antrieb für die Bewegung des Hakens vorgesehen werden muss.

Es kann vorteilhaft sein, wenn der Eingreifabschnitt in der ausgelenkten Position des Hakens stromabwärts eines stromabwärtsseitigen Endabschnitts des Haltebands angeordnet ist. Dadurch kann ermöglicht werden, dass der Haken auch in der ausgelenkten Position noch mit dem Teigstück eingreift. Dies kann es ermöglichen, dass das Teigstück möglichst weit, vorzugsweise um 90°, besonders bevorzugt um 180°, um das Füllgut herum gefaltet wird. Darüber hinaus kann es ermöglicht werden, dass das gefaltete Teigstück unmittelbar an die folgende Komponente der Wickelvorrichtung, insbesondere das Wickelelement, übergeben werden kann. Als stromabwärtsseitiger Endabschnitt des Haltebands kann ein Abschnitt angesehen werden, an dem das Füllgut außer Eingriff mit dem Halteband gebracht wird.

Besonders günstig ist es, wenn eine Schwenkachse, um welche der Haken schwenkbar ist, quer, vorzugsweise senkrecht, zu der Produktionsrichtung orientiert ist. Auf diese Weise kann die weiter oben beschriebene Antriebswirkung der Fördervorrichtung besonders effektiv ausgenutzt werden.

Vorteilhafterweise kann die Schwenkachse stromaufwärts eines stromabwärtsseitigen Endabschnitts des Haltebands angeordnet sein. Dadurch kann es ermöglicht werden, dass der weiter oben beschriebene Eingreifabschnitt des Hakens stromabwärts von und möglichst nah an dem stromabwärtsseitigen Endabschnitt des Haltebands angeordnet werden kann. Dadurch kann eine unmittelbare Übergabe des gefalteten Teigstücks von dem Haken an die folgende Komponente der Wickelvorrichtung, insbesondere das Wickelelement, übergeben werden.

Die Faltvorrichtung kann insbesondere zwei Haken umfassen. Auch eine höhere Zahl von Haken ist denkbar. Ausführungen mit zwei oder mehr Haken können vorteilhaft sein, da auch besonders breite Teigstücke zuverlässig und gleichmäßig nach oben gefaltet werden können. Bei Ausführungen mit zwei oder mehr Haken ist es vorteilhaft, wenn die Haken um eine gemeinsame Schwenkachse schwenkbar sind. Dabei kann es sich um eine physische Achse, z. B. in Form einer Welle, handeln. Alternativ kann jeder einzelne Haken oder einzelne Gruppen von Haken an einer eigenen physischen Achse, z. B. in Form einer Welle, gelagert sein, wobei sämtliche physischen Achsen parallel, vorzugsweise kollinear, zueinander orientiert sind.

Besonders günstig ist es, wenn das Halteband zwischen den zwei Haken angeordnet ist. Dadurch kann das Risiko einer asymmetrischen Wicklung verringert werden. Insbesondere bei Ausführungen mit mehr als zwei Haken ist es denkbar, dass sich ein, zwei oder mehr Haltebänder mit den Haken abwechseln, bevorzugt in einer Richtung entlang einer gemeinsamen Schwenkachse der Haken.

Es ist denkbar, dass die Wickelvorrichtung eine Wickelmatte umfasst, die über der Fördervorrichtung angeordnet ist, und welche dazu konfiguriert ist von oben mit dem Teigstück einzugreifen, insbesondere auf diesem aufzuliegen. Eine Wickelmatte kann eine besonders einfache und kostengünstige Möglichkeit darstellen, die Teigprodukte nach dem anfänglichen Falten fertig zu wickeln.

Es kann vorteilhaft sein, wenn die Vorrichtung eine Saugvorrichtung umfasst, die dazu konfiguriert ist, unter der Fördervorrichtung einen Unterdruck zu erzeugen, wobei die Fördervorrichtung Öffnungen aufweist, wodurch die Teigstücke durch den Unterdruck an die Fördervorrichtung saugbar sind. Dadurch kann die Haftung des Teigstücks auf der Fördervorrichtung erhöht werden. Eine erhöhte Haftung kann die Förderung des Teigstücks durch die Fördervorrichtung unterstützen. Dadurch kann ein Risiko verringert werden, dass eine potenzielle bremsende Wirkung des Hakens bei dem Eingriff mit dem Teigstück dazu führt, dass die Fördervorrichtung unter dem Teigstück hindurchgleitet.

Besonders vorteilhaft ist es, wenn die Saugvorrichtung dazu konfiguriert ist, den Unterdruck entlang einer Saugstrecke zu erzeugen, die sich entlang der Produktionsrichtung erstreckt, wobei ein Ende der Saugstrecke stromaufwärts der Stelle angeordnet ist, an welcher die Wickelvorrichtung erstmals mit dem Teigstück eingreift. Alternativ oder zusätzlich kann die Stelle, an welcher die Wickelvorrichtung erstmals mit dem Teigstück eingreift, als die Stelle definiert sein, an welcher der Eingreifabschnitt des Hakens in der Ausgangsposition des Hakens der Fördervorrichtung am nächsten ist. Die beiden Definitionen können also synonym verwendet werden.

Durch die Anordnung des Endes der Saugstrecke und der vorstehend definierten Stelle relativ zueinander kann ein Anheben einer Vorderkante des Teigstücks durch den Haken erleichtert werden, da die Vorderkante des Teigstücks nicht mehr angesaugt wird, wenn sie mit dem Haken, insbesondere dem Eingreifabschnitt, eingreift. Besonders günstig ist es, wenn das Ende der Saugstrecke in einem Abstand von der Stelle angeordnet ist, an welcher die Wickelvorrichtung erstmals mit dem Teigstück eingreift.

Die Erfindung bezieht sich auf eine Vorrichtung zum Erzeugen von gefüllten Teigprodukten der vorstehend beschriebenen Art. Im Folgenden wird ein vorteilhaftes Ausführungsbeispiel anhand von Zeichnungen näher erläutert.
- Figur 1: zeigt eine schematische seitliche Schnittansicht einer Vorrichtung zum Erzeugen von gefüllten Teigprodukten.
- Figur 2: zeigt eine Detailansicht eines Abschnitts von Figur 1, wobei ein Teigstück im Eingriff mit einem Haken der Vorrichtung ist.
- Figur 3: zeigt eine ähnliche Ansicht wie Figur 2, wobei das nach oben gefaltete Teigstück an ein Wickelelement übergeben wird.
- Figur 4: zeigt eine ähnliche Ansicht wie Figuren 2 und 3, wobei das Teigprodukt durch das Wickelelement bereits weiter gewickelt wurde.
- Figur 5: zeigt eine perspektivische Ansicht der Vorrichtung zum Erzeugen von gefüllten Teigprodukten.

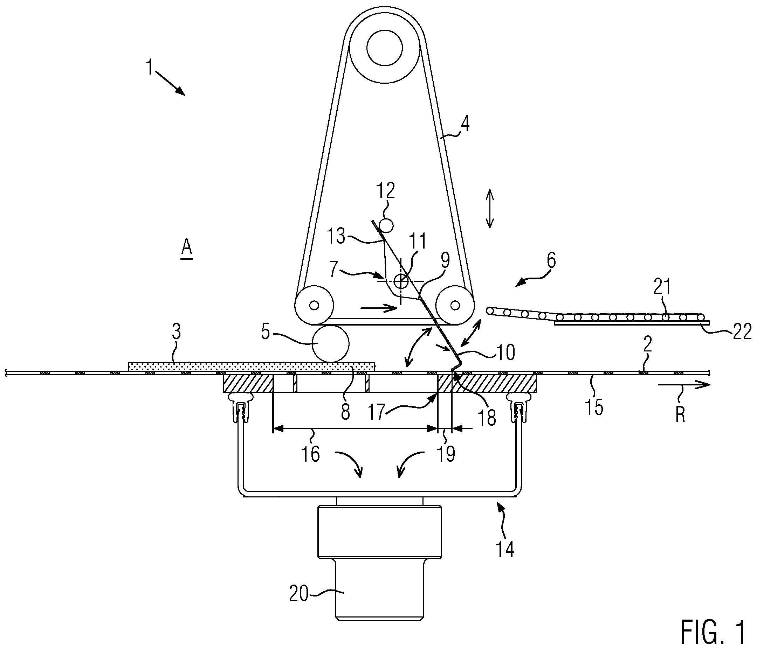

In Figur 1 ist eine Vorrichtung 1 zum Erzeugen von gefüllten Teigprodukten in einer schematischen seitlichen Schnittansicht dargestellt. Die Vorrichtung 1 kann eine Fördervorrichtung 2 umfassen. Die Fördervorrichtung 2 kann zum Fördern von Teigstücken 3 in einer Produktionsrichtung R konfiguriert sein. Wie im vorliegenden Ausführungsbeispiel dargestellt, kann die Fördervorrichtung 2 ein Förderband umfassen. Die Vorrichtung 1 kann des Weiteren ein Halteband 4 umfassen. Das Halteband 4 kann oberhalb der Fördervorrichtung 2 angeordnet sein.

Es kann zum Eingreifen mit einem Füllgut 5 konfiguriert sein, das auf jeweils einem der Teigstücke 3 angeordnet sein kann. Darüber hinaus kann die Vorrichtung 1 eine Wickelvorrichtung 6 umfassen. Die Wickelvorrichtung 6 kann zum Falten und/oder Wickeln eines der Teigstücke 3 konfiguriert sein. Die Wickelvorrichtung 6 kann eine Faltvorrichtung 7 umfassen.

Die Faltvorrichtung 7 kann dazu eingerichtet sein, einen Faltabschnitt 8 des Teigstücks 3 nach oben zu falten. Dazu kann die Faltvorrichtung 7 einen Haken 9 umfassen. Der Haken 9 kann schwenkbar über der Fördervorrichtung 2 angeordnet sein. Der Haken 9 kann einen Eingreifabschnitt 10 aufweisen. Der Eingreifabschnitt 10 kann zum Eingreifen mit einem auf der Fördervorrichtung 2 geförderten Teigstück 3 konfiguriert sein. Wie im vorliegenden Ausführungsbeispiel dargestellt, kann dies durch eine geeignete Positionierung, insbesondere einer Beabstandung, einer Schwenkachse 11, um die der Haken 9 schwenkbar sein kann, relativ zu der Fördervorrichtung 2 erreicht werden. Des Weiteren kann ein Anschlag 12 vorgesehen sein. Der Anschlag 12 kann dazu konfiguriert sein, mit einem Anschlagabschnitt 13, der an dem Haken 9 vorgesehen sein kann, einzugreifen. Der Anschlagabschnitt 13 kann auf einer bezüglich der Schwenkachse 11 dem Eingreifabschnitt 10 gegenüberliegenden Seite des Hakens 9 angeordnet sein. Alternativ oder zusätzlich zu der geeigneten Beabstandung der Schwenkachse 11 von der Fördervorrichtung 2 kann durch eine geeignete Positionierung des Anschlags 12 ein gewünschtes Eingreifen von dem Eingreifabschnitt 10 mit dem Teigstück 8 erreicht werden.

Die Vorrichtung 1 kann des Weiteren eine Saugvorrichtung 14 umfassen. Die Saugvorrichtung 14 kann dazu konfiguriert sein, unter der Fördervorrichtung 2 einen Unterdruck zu erzeugen. Außerdem kann die Fördervorrichtung 2 Öffnungen 15 aufweisen. Dadurch können die Teigstücke 3 durch den Unterdruck an die Fördervorrichtung 2 saugbar sein. Durch das Ansaugen der Teigstücke 3 an die Fördervorrichtung 2 kann eine Haftung zwischen den Teigstücken 3 und der Fördervorrichtung 2 erhöht werden. Die Saugvorrichtung 14 kann dazu konfiguriert sein, den Unterdruck entlang einer Saugstrecke 16 zu erzeugen.

Die Saugstrecke 16 kann sich entlang der Produktionsrichtung R erstrecken. Ein Ende 17 der Saugstrecke 16 kann stromaufwärts einer Stelle 18 angeordnet sein, an welcher die Wickelvorrichtung 6, insbesondere die Faltvorrichtung 7, erstmals mit dem Teigstück 3 eingreift. Insbesondere kann das Ende 17 der Saugstrecke 16 in einem Abstand 19 von der Stelle 18 angeordnet sein. Dadurch kann das nach oben Falten des Faltabschnitts 8 des Teigstücks 3 erleichtert werden. Zum Erzeugen des Unterdrucks kann die Saugvorrichtung 14 einen Unterdruckerzeuger 20, wie zum Beispiel eine Pumpe, eine Vakuumpumpe oder einen Kompressor, aufweisen.

Die Wickelvorrichtung 6 kann des Weiteren ein Wickelelement 21 aufweisen. Das Wickelelement 21 kann stromabwärts der Faltvorrichtung 7 angeordnet sein. Es kann dazu konfiguriert sein, den durch die Faltvorrichtung 7 initiierten Wickelvorgang fortzusetzen. Das Wickelelement 21 kann oberhalb der Fördervorrichtung 2 angeordnet sein. Wie im vorliegenden Ausführungsbeispiel dargestellt, kann das Wickelelement 21 eine Wickelmatte sein oder umfassen. Denkbar sind beispielsweise Wickelmatten aus einem Drahtgeflechtsgurt. Alternativ kann das Wickelelement 21 ein Förderband sein oder umfassen.

Der Abstand des Wickelelements 21 von der Fördervorrichtung 2 kann einstellbar sein. In Fällen wie dem vorliegenden Ausführungsbeispiel, in dem das Wickelelement 21 eine Wickelmatte umfasst, können dazu ein oder mehrere Halter 22 vorgesehen sein. Das Wickelelement 21, insbesondere die Wickelmatte, kann zum Beispiel auf den Halter 22 aufgelegt sein.

Im Folgenden soll die Funktion der Vorrichtung 1 anhand des in den Figuren gezeigten Ausführungsbeispiels näher erläutert werden. Figur 1 zeigt das Teigstück 3 und das darauf angeordnete Füllgut 5 bevor das Teigstück 3 mit dem Eingreifabschnitt 10 des Hakens 9 eingreift. Es ist zu erkennen, dass das Halteband 4 dazu eingerichtet sein kann, mit dem Füllgut 5 einzugreifen. Besonders bevorzugt ist hierbei eine Konfiguration, in der erreicht wird, dass das Füllgut an der Position relativ zu dem Teigstück 3 gehalten wird. Dazu kann das Halteband 4 gleich schnell angetrieben werden wie die Fördervorrichtung 2. Es ist jedoch auch denkbar, dass die Positionierung des Füllguts 5 auf dem Teigstück 3 gezielt beeinflusst und/oder verändert werden kann, zum Beispiel durch unterschiedliche Antriebsgeschwindigkeiten des Haltebands 4 und der Fördervorrichtung 2.

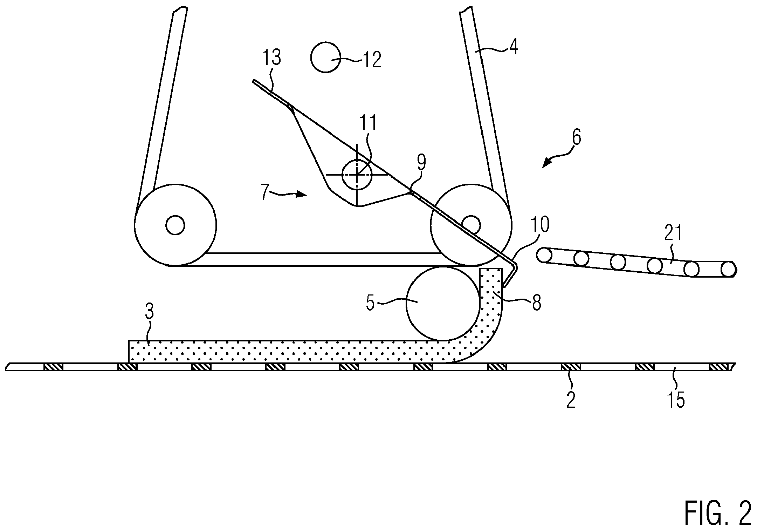

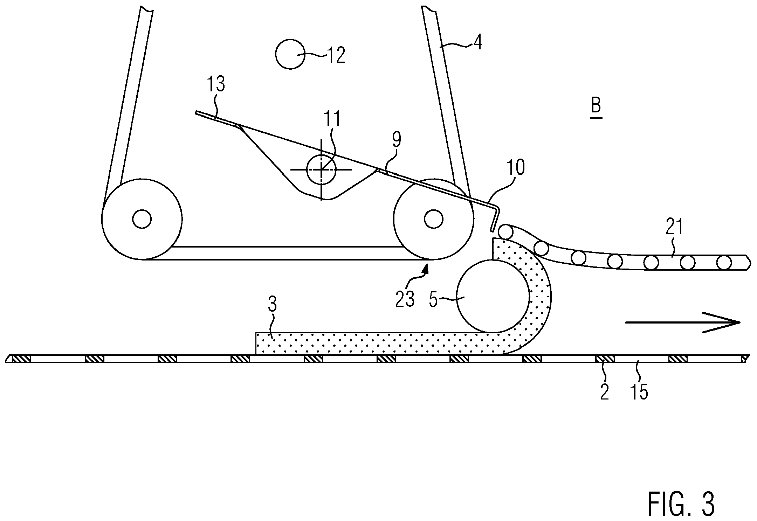

In Figur 1 befindet sich der Haken 9 in einer Ausgangsposition A. Durch den Eingriff des Teigstücks 3, insbesondere des Faltabschnitts 8, mit dem Haken 9, insbesondere mit dem Eingreifabschnitt 10, und die Förderung des Teigstücks 3 durch die Fördervorrichtung 2 kann der Haken 9 aus der Ausgangsposition A in Richtung hin zu einer ausgelenkten Position B (siehe Figur 3) bewegt werden. Figur 2 zeigt den Haken 9 während der Bewegung von der Ausgangsposition A hin zu der ausgelenkten Position B.

In Figur 3 ist der Haken 9 in der ausgelenkten Position B gezeigt. In dieser Position kann der Eingriff zwischen dem Eingreifabschnitt 10 des Hakens 9 und dem Teigstück 3 gelöst werden. In dieser Position kann sich außerdem der Eingreifabschnitt 10 des Hakens 9 stromabwärts eines stromabwärtsseitigen Endabschnitts 23 des Haltebands angeordnet sein. An diesem stromabwärtsseitigen Endabschnitt 23 des Haltebands 4 kann der Eingriff zwischen dem Halteband 4 und dem Füllgut 5 gelöst werden. In Figur 3 ist ebenfalls zu erkennen, dass unmittelbar nachdem der Eingriff zwischen dem Eingreifabschnitt 10 und dem Teigstück 3 gelöst wurde, das Wickelelement 21 mit dem Teigstück 3 in Eingriff gebracht wird.

Die Schwenkachse 11 kann stromaufwärts des stromabwärtsseitigen Endabschnitts 23 des Haltebands 4 angeordnet sein. Die Schwenkachse 11 kann quer, vorzugsweise, wie im vorliegenden Ausführungsbeispiel, senkrecht zu der Produktionsrichtung R orientiert sein.

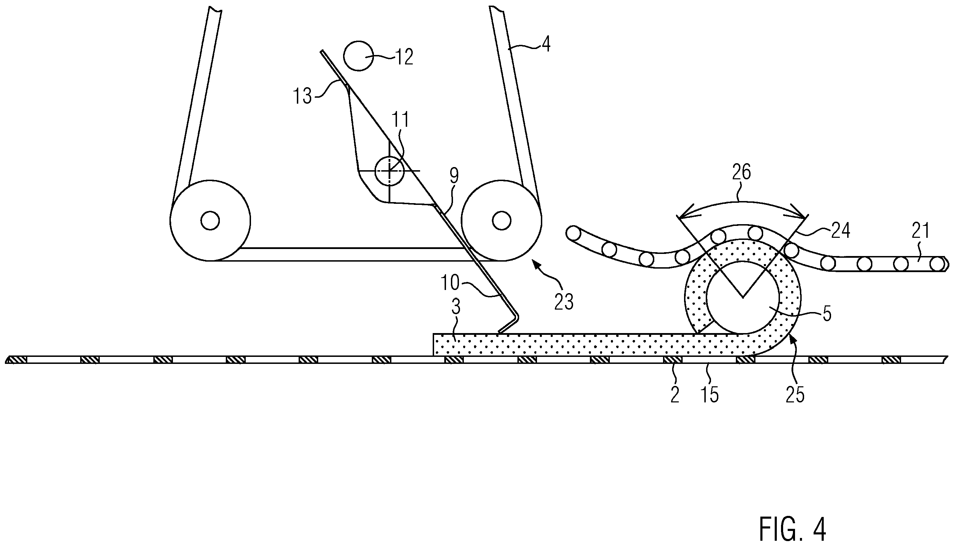

Durch einen Geschwindigkeitsunterschied zwischen der Fördervorrichtung 2 und dem Wickelelement 21 kann das Teigstück 3 weiter um das Füllgut 5 gewickelt werden, wie in Figur 4 zu sehen ist. Dort ist ebenfalls zu sehen, dass der Haken 9 durch Schwerkraft wieder in Richtung seiner Ausgangsposition A bewegt werden kann. Es ist außerdem zu erkennen, dass das Wickelelement 21 in einem Umschlingungssektor 24 auf dem zum jeweiligen Zeitpunkt gewickelten Teigprodukt 25 aufliegt. Der Umschlingungssektor 24 kann einen Umschlingungswinkel 26 aufweisen. Ein Fachmann erkennt, dass durch den Abstand zwischen dem Wickelelement 21 und der Fördervorrichtung 2 der Umschlingungswinkel 26 einstellbar sein kann.

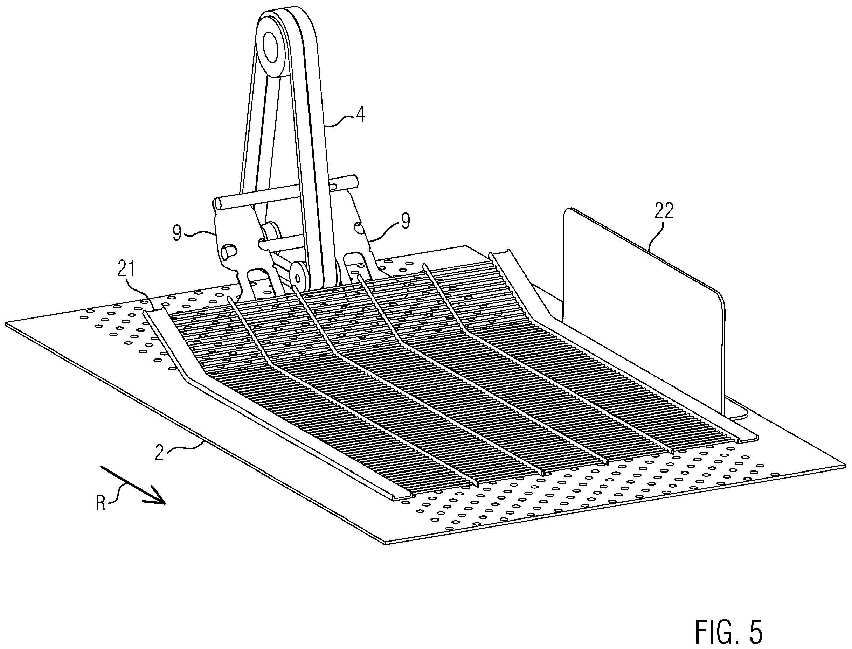

In Figur 5 ist veranschaulicht, dass die Wickelvorrichtung 6, insbesondere die Faltvorrichtung 7 zwei Haken 9 aufweisen kann. Die zwei Haken 9 können quer, insbesondere senkrecht, zur Produktionsrichtung R beabstandet sein. Das Halteband 4 kann zwischen den Haken 9 angeordnet sein. Ebenfalls etwas besser zu erkennen ist der Halter 22, der in einem seitlichen Randbereich der Fördervorrichtung 2 angeordnet sein kann. Insbesondere können zwei Halter 22 vorgesehen sein, von denen zur besseren Erkennbarkeit der übrigen Komponenten in Figur 5 jedoch nur einer dargestellt ist. Ein zweiter Halter 22 kann beispielsweise an der gegenüberliegenden Seite des Wickelelements 21 angeordnet sein.

## Patentansprüche

1. Vorrichtung (1) zum Erzeugen von gefüllten Teigprodukten (25), umfassend:
eine Fördervorrichtung (2), die zum Fördern von Teigstücken (3) in einer Produktionsrichtung (R) konfiguriert ist,
wenigstens ein Halteband (4), das oberhalb der Fördervorrichtung (2) angeordnet ist, und zum Eingreifen mit einem auf jeweils einem der Teigstücke (3) angeordneten Füllgut (5) konfiguriert ist, und
eine Wickelvorrichtung (6), die zum Falten und/oder Wickeln eines der Teigstücke (3) konfiguriert ist und eine Faltvorrichtung (7) umfasst, die dazu eingerichtet ist, einen Faltabschnitt (8) des Teigstücks (3) nach oben zu falten, wobei die Faltvorrichtung (7) wenigstens einen Haken (9) umfasst, der schwenkbar über der Fördervorrichtung (2) angeordnet ist.

2. Vorrichtung nach Anspruch 1, wobei der Haken (9) einen Eingreifabschnitt (10) aufweist, der zum Eingreifen mit einem auf der Fördervorrichtung (2) geförderten Teigstück (3) konfiguriert ist.

3. Vorrichtung nach Anspruch 2, wobei der Haken (9) durch den Eingriff des Eingreifabschnitts (10) mit dem Teigstück (3) und dessen Förderung durch die Fördervorrichtung (2) von einer Ausgangsposition (A) hin zu einer ausgelenkten Position (B) schwenkbar ist.

4. Vorrichtung nach Anspruch 3, wobei der Eingreifabschnitt (10) in der ausgelenkten Position (A) des Hakens (9) stromabwärts eines stromabwärtsseitigen Endabschnitts (23) des Haltebands (4) angeordnet ist.

5. Vorrichtung nach einem der vorangehenden Ansprüche, wobei eine Schwenkachse (11), um welche der Haken (9) schwenkbar ist, quer, vorzugsweise senkrecht, zu der Produktionsrichtung (R) orientiert ist.

6. Vorrichtung nach Anspruch 5, wobei die Schwenkachse (11) stromaufwärts eines stromabwärtsseitigen Endabschnitts (23) des Haltebands (4) angeordnet ist.

7. Vorrichtung nach einem der vorangehenden Ansprüche, wobei die Faltvorrichtung (7) zwei Haken (9) umfasst.

8. Vorrichtung nach Anspruch 7, wobei das Halteband (4) zwischen den zwei Haken (9) angeordnet ist.

9. Vorrichtung nach einem der vorangehenden Ansprüche, wobei die Wickelvorrichtung (6) eine Wickelmatte (21) umfasst, die über der Fördervorrichtung (2) angeordnet ist, und welche dazu konfiguriert ist von oben mit dem Teigstück (3) einzugreifen, insbesondere auf diesem aufzuliegen.

10. Vorrichtung nach einem der vorangehenden Ansprüche, wobei die Vorrichtung eine Saugvorrichtung (14) umfasst, die dazu konfiguriert ist, unter der Fördervorrichtung (2) einen Unterdruck zu erzeugen, wobei die Fördervorrichtung (2) Öffnungen (15) aufweist, wodurch die Teigstücke (3) durch den Unterdruck an die Fördervorrichtung (2) saugbar sind.

11. Vorrichtung nach Anspruch 10, wobei die Saugvorrichtung (14) dazu konfiguriert ist, den Unterdruck entlang einer Saugstrecke (16) zu erzeugen, die sich entlang der Produktionsrichtung (R) erstreckt, wobei ein Ende (17) der Saugstrecke (16) stromaufwärts der Stelle (18) angeordnet ist, an welcher die Wickelvorrichtung (6) erstmals mit dem Teigstück (3) eingreift.

12. Vorrichtung nach Anspruch 11, wobei das Ende (17) der Saugstrecke (16) in einem Abstand (19) von der Stelle (18) angeordnet ist, an welcher die Wickelvorrichtung (6) erstmals mit dem Teigstück (3) eingreift.
